Europäisches Patentamt

European Patent Office

Office européen des brevets

(11) Publication number: 0 472 046 A1

# EUROPEAN PATENT APPLICATION

(21) Application number: 91113210.8

(51) Int. Cl.5: F16F 1/36, F16F 1/38

(22) Date of filing: 06.08.91

(30) Priority: 24.08.90 JP 223495/90

(43) Date of publication of application:
26.02.92 Bulletin 92/09

(84) Designated Contracting States:
DE FR GB

(71) Applicant: BANDO CHEMICAL INDUSTRIES, LIMITED
2-15, Meiwa-dori 3-chome
Hyogo-ku Kobe-shi(JP)

(72) Inventor: Fujiwara, Katsuyoshi, c/o BANDO CHEMICAL IND.
2-15, Meiwa-dori 3-chome
Hyogo-ku, Kobe-shi(JP)
Inventor: Wada, Noriaki, c/o BANDO CHEMICAL IND.
2-15, Meiwa-dori 3-chome
Hyogo-ku, Kobe-shi(JP)

(74) Representative: Gauger, Hans-Peter, Dipl.-Ing. et al
Müller, Schupfner & Gauger
Maximilianstrasse 6 Postfach 10 11 61
W-8000 München 1(DE)

(54) Rubber bush.

(57) A rubber bush (1) includes an inner and an outer cylinders (2,3) and a rubber member (5) interposed therebetween. The spring modulus thereof is high in a radial direction and low in an axial direction. In a center portion of the rubber member in the radial direction, short fiber is oriented radially. In the inner and the outer layers (L3) respectively secured to the inner and the outer cylinders (2,3), the short fiber is oriented axially. Thus, the inner and the outer layers can receive severe force in the axial direction and the center portion absorbs vibration caused by shear.

FIG 1

BACKGROUND OF THE INVENTION

This invention relates to a rubber bush including an inner and outer cylinders and a rubber member interposed therebetween, in which spring modulus is high in a radial direction and low in an axial direction.

In a bush assembly applied to a pivotal connecting part of a suspension for a vehicle such as a control arm bush used at a connecting part of a control arm and a vehicle body side member, there has been known a technique that a cylindrical elastic body member made of rubber material is interposed between the inner and the outer cylinders which are disposed coaxially and a layer of metal reinforcement is embedded therein.

Another bush assembly has been proposed in which short fiber is oriented for the same purpose without such a metal reinforcement (e.g., Japanese Patent Application Laying Open Gazette 63-297835).

The former one, however, increases in its weight because of the metal reinforcement, which leads to no improvement in fuel consumption and acceleratability. Further, when the displacement in a normal direction is made small, that in the axial direction becomes also small owing to the isotropy of the rubber. As a result, vibration can be hardly absorbed, and vice versa.

Though the latter one can solve this problem, such the rubber has less strength against force in the axial direction and high stress at an interface with a cylinder member (metal) secured thereto, which leads to breakage.

SUMMARY OF THE INVENTION

The present invention has for its object to provide a rubber bush which is hard to deform in a radial direction, and absorbs vibration in an axial direction with superior fatigue resistance against vibration.

In order to attain the object, the present invention premises that the rubber bush includes an inner cylinder, an outer cylinder and a rubber member interposed therebetween, in which the spring modulus is high in the radial direction and low in the axial direction. The present invention is characterized in that short fiber is radially oriented in a center portion of the rubber member in the radial direction, and axially oriented in an inner and an outer layers thereof which are respectively secured to the inner and the outer cylinders.

Consequently, the inner and the outer layers respectively secured to the inner and the outer cylinders can receive sever force and the center portion can absorb vibration causing shear. Thus, vibration in the axial direction is absorbed and deformation in the radial direction is hard to occur. This leads to superor fatigue resistance against vibration, with light weight, small size and low cost.

In the present invention, each inner and outer layer has a radial thickness of a range from 1 to 30% of the rubber member from each surface where the rubber member is secured to the inner and the outer cylinders. The other part is the center portion. An orientation rate in the axial direction of the short fiber in the inner and the outer layers is set in a range of 10-98% and that in the radial direction thereof in the center portion, 2-90%.

BRIEF DESCRIPTION OF THE DRAWINGS

Accompanying drawings show preferred embodiment of the present invention, in which:
Figs.1 and 2 are respectively a sectional view and a perspective view of a rubber bush;
Fig.3 is an explanatory drawing of a modified example;
Figs.4(a)-(e) show orientations of short fiber; and
Figs.5 and 6 are explanatory drawings of a testing equipment.

DETAILED DESCRIPTION OF THE INVENTION

A description is made below of embodiment of the present invention with reference to the accompanying drawings.

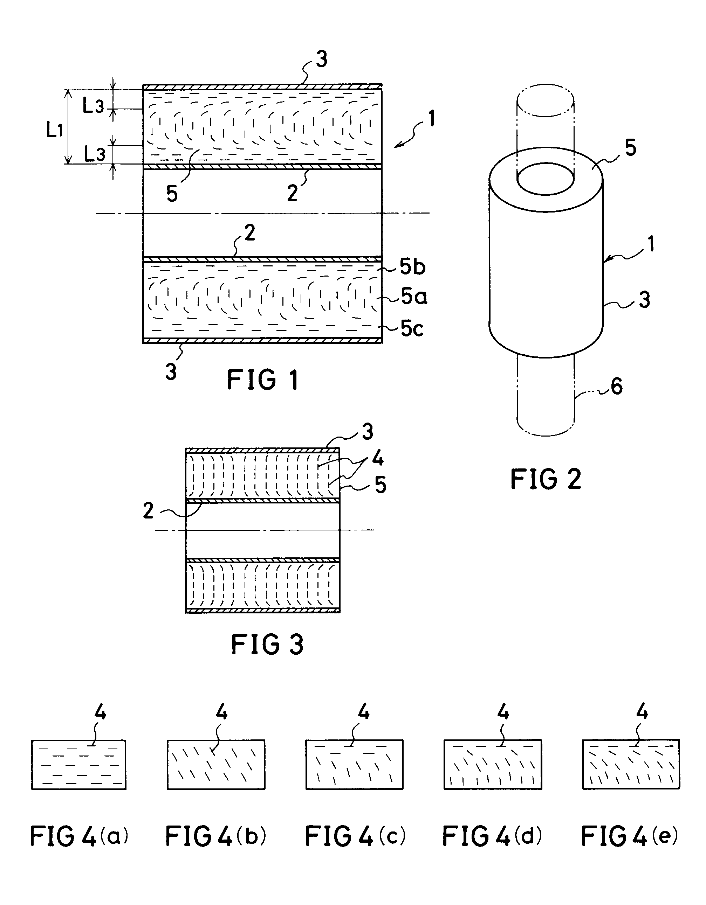

In Figs.1 and 2, a cylindrical rubber bush 1 is includes a metal inner cylinder 2, a metal outer cylinder 3 and a rubber member 5 interposed therebetween. Short fiber 4 is mixed to the rubber member 5. The rubber bush has high spring modulus in a raidal direction thereof and low spring modulus in an axial direction thereof. A shaft member 6 is inserted in the inner cylinder 2.

In a center portion 5a of the rubber member 5 of the radial direction (direction of thickness), the short fiber 4 is oriented in the radial direction. In an inner layer 5b and an outer layer 5c which are respectively secured to the inner cylinder 2 and outer cylinder 3, the short fiber 4 is oriented in the axial direction. The inner and the outer layers 5b, 5c have a radial thickness of a range from 1 to 30% of the rubber member 5 from each surface secured to the inner and the outer cylinders. The other part is the center portion 5a. An orientation rate in the axial direction of the short fiber 4 in the inner and the outer layers 5b, 5c is set in a range from 10 to 98%, and the orientation rate in the radial direction thereof in the center portion 5a is set in a range from 2 to 90%.

Variation of the orientation from the inner layer 5b to the outer layer 5c may be continuous, as shown in Fig.3 (in this case, it is required to orient the short fiber 4 radially in the center portion 5a, or the other layers may be interposed therebetween. In addition, the short fiber 4 may be oriented, in partial, in a peripheral direction.

The orientation rate is calculated as below.

Coordinate axes of appropriate lengths are drawn on a sample of cylindrical shape so as to define X, Y and Z directions (or the length of the sample may be measured). The lengths of each coordinate axis are $x_1$, $y_1$ and $z_1$ respectively. The sample is soaked in a solvent (for the time required for swelling it to approximately 100% cubical swell rate). The coordinate axes of the sample taken out from the solvent is measured. Each measured length is $x_2$, $y_2$ and $z_2$ respectively.

The orientation rate of each direction can be obtained from the following equations.

$$ax = x_2/x_1 \, , \quad ay = y_2/y_1 \, , \quad az = z_2/z_1$$
$$L = 1/(ax-1) + 1/(ay-1) + 1/(az-1)$$
$$(\text{orientation rate in x direction}) = \{1/(ax-1)\}/L$$
$$(\text{orientation rate in y direction}) = \{1/(ay-1)\}/L$$
$$(\text{orientation rate in z direction}) = \{1/(az-1)\}/L$$

The description is made below of tests for the rubber bush 1.

A rubber bush 1 of 23mm inner diameter, 44.4mm outer diameter and 50mm length is used in the tests. The rubber member 5 has its thickness $L_1$ of 9mm. The inner and the outer layers 5b, 5c are varied in its thickness $L_3$, $L_3$ and the orientation of the short fiber 4 is varied. Then measured are:

(A) displaced quantity x when the shaft member 6 is urged laterally with 500kgf force;

(B) force F required for moving 1mm the shaft member 6 downward; and

(C) number of breakage N of the rubber member 5 when moving ±1mm the shaft member 6 up and down.

The results of the tests are indicated in Table 1. Figs .4 (a)-(e) show the orientations of the short fiber 4 in the inner and the outer layers 5b, 5c in Examples of the present invention 1-4 and Comparative Example 2. In present invention, in Example 1, the short fiber 4 is oriented axially, in Example 2, the short fiber 4 is somewhat inclined with respect to the axial direction, and In Examples 3 and 4 and Comparative Example 2, the short fiber 4 is gradually inclined with respect to the axial direction from a portion parallel with the axial direction to the center side.

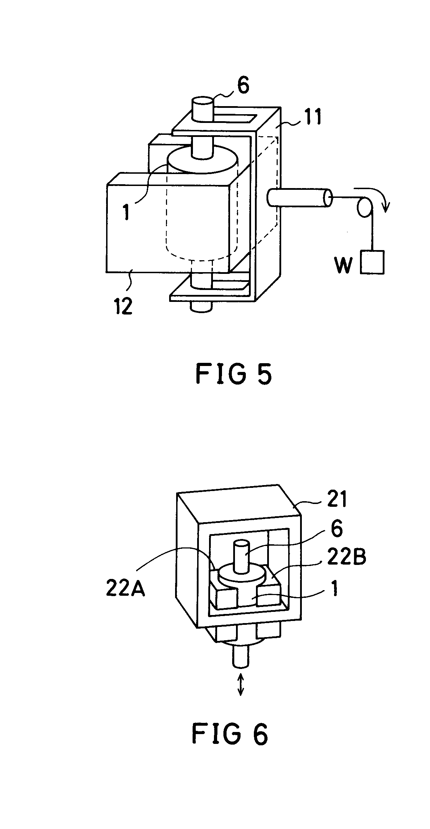

As for (A), measuring the displaced quantity x, as shown in Fig.5, an outer flame member 11 supports both ends of the shaft member 6 inserted in the inner cylinder of the rubber bush 1, an inner flame member 12 supports the outer cylinder of the rubber bush 1, and load W (500kgf) is applied to the outer flame member 11 in a direction opposite to the inner flame member 12. The displaced quantity x is measured at that time. As for (B), measuring the force F, as shown in Fig.6, fitting members 22A, 22B fixed with screws fix the rubber bush 1 to a flame member 21, a load cell (not shown in the drawing) is applied from the upper side, and the shaft member 6 inserted in the inner cylinder of the rubber bush is moved 1mm downwardly. The force F required for moving 1mm the shaft member 6 is read out. As for (C), measuring the number of breakage N, the same testing equipment as for measuring the force, as shown in Fig.6, is used. The shaft member 6 inserted in the inner cylinder of the rubber bush is moved ±1mm up and down, and the number of the breakage N thereby is counted.

Table 1

| | Comparative Examples | | Example of the present invention | | | |
|---|---|---|---|---|---|---|
| | 1 | 2 | 1 | 2 | 3 | 4 |
| $L_3$ | 0 | 4 | 2 | 2 | 2 | 3 |
| x (mm) | 0.73 | 1.20 | 0.82 | 0.78 | 0.79 | 0.85 |
| F (kgf) | 32.2 | 58.9 | 33.7 | 32.6 | 32.7 | 43.5 |
| N (cycle) | $1.3 \times 10^8$ | $8.1 \times 10^{10}$ | $1.7 \times 10^9$ | $3.5 \times 10^9$ | $4.7 \times 10^{10}$ | $7.3 \times 10^{10}$ |

Under the above construction, since the short fiber 4 in the inner layer 5b and the outer layer 5c of the rubber member 5 is mostly oriented in the axial direction, and the rubber member 5 is secured to both cylinders 2, 3, severe force in the axial direction can be absorbed, thanks to the reinforcing effect of the short fiber 4. In addition, the center portion absorbs vibration caused by the shear force affecting in the raidal direction.

As a result, the rubber bush 1 absorbs vibration in the axial direction and is hard to deform in the radial direction. Thus, superior fatigue resistance, lightening of the weight and compaction are planned with low cost.

**Claims**

1. A rubber bush including an inner cylinder, an outer cylinder, and a rubber member interposed therebetween, in which spring modulus is high in a radial direction and low in an axial direction, said rubber member comprising:
   a center portion in the radial direction having
   short fiber oriented in the radial direction of said rubber bush; and
   an inner layer and an outer layer having short fiber oriented in the axial direction of said rubber bush, said inner layer and said outer layer being secured to said inner cylinder and said outer cylinder respectively.

2. A rubber bush according to Claim 1, wherein said inner layer and said outer layer have a radial thickness of range from 1 to 30% of said rubber bush from each surface where said rubber member is secured to said inner cylinder and said outer cylinder, and other part is a center portion.

3. A rubber bush according to Claim 2, wherein an orientation rate in the axial direction of said short fiber in said inner cylinder and said outer cylinder is set in a range from 10 to 98%, and an orientation rate in the radial direction of said short fiber in said center portion is set in a range from 2 to 90%.

FIG 1

FIG 2

FIG 3

FIG 4 (a)    FIG 4 (b)    FIG 4 (c)    FIG 4 (d)    FIG 4 (e)

FIG 5

FIG 6

European
Patent Office

EUROPEAN SEARCH
REPORT

Application Number

EP 91 11 3210

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y,D | PATENT ABSTRACTS OF JAPAN vol. 13, no. 130 (M-808)(3478) 30 March 1989 & JP-A-63 297 835 ( HONDA MOTOR CO. ) 5 December 1988 * abstract * * | 1,2 | F 16 F 1/36 F 16 F 1/38 |
| | – – – | | |
| Y | PATENT ABSTRACTS OF JAPAN vol. 10, no. 238 (M-508)(2294) 16 August 1986 & JP-A-61 070 235 ( HINO MOTORS ) 11 April 1986 * abstract * * | 1,2 | |
| | – – – | | |
| A | PATENT ABSTRACTS OF JAPAN vol. 11, no. 158 (M-591)(2605) 22 May 1987 & JP-A-61 290 243 ( HONDA MOTOR CO. ) 20 December 1986 * abstract * * | 1 | |
| | – – – – – | | |

TECHNICAL FIELDS
SEARCHED (Int. Cl.5)

F 16 F

The present search report has been drawn up for all claims

| Place of search | Date of completion of search | Examiner |
|---|---|---|
| The Hague | 12 November 91 | TSITSILONIS L. |